# FASCICULE DE BREVET EUROPEEN

(11) **EP 4 725 833 B1**
(45) Date de publication et mention de la délivrance du brevet: **25.11.2026**
(21) Numéro de dépôt: 25200079.9
(22) Date de dépôt: 04.09.2025
(51) Int. Cl.: B64C 11/06, B64C 11/32, B64C 11/38

(54) **SYSTÈME DE PROPULSION À HÉLICE POUR AÉRONEF COMPORTANT DES MOYENS DE RÉGLAGE DE L ANGLE DE PAS DES PALES DE L HÉLICE ET AÉRONEF COMPORTANT UN TEL SYSTÈME DE PROPULSION**
PROPELLERANTRIEBSSYSTEM FÜR EIN FLUGZEUG MIT MITTELN ZUR EINSTELLUNG DES ANSTELLWINKELS DER PROPELLERBLÄTTER UND FLUGZEUG MIT SOLCH EINEM ANTRIEBSSYSTEM
PROPELLER PROPULSION SYSTEM FOR AN AIRCRAFT COMPRISING MEANS FOR ADJUSTING THE PITCH ANGLE OF THE BLADES OF THE PROPELLER AND AIRCRAFT COMPRISING SUCH A PROPULSION SYSTEM

(30) Priorité: 24.09.2024 FR 2410200
(43) Date de publication de la demande: 15.04.2026
(73) Titulaire: AIRBUS OPERATIONS (S.A.S.), 31060 Toulouse (FR)
(72) Inventeur: AMARGIER, Rémi, 31060 TOULOUSE (FR); PAQUET, Cédric, 31060 TOULOUSE (FR); MAHE, Mathieu, 31060 TOULOUSE (FR); SCHERRER, Matthieu, 31060 TOULOUSE (FR)
(74) Mandataire: Airbus-OPS SAS

(56) Documents cités:
- EP-A2- 1 153 828
- WO-A1-2021/255373
- CA-A1- 3 024 684
- DE-B4- 19 841 853
- FR-A1- 3 005 096
- US-B2- 7 037 072

## Description

### DOMAINE TECHNIQUE

La présente invention concerne un système de propulsion à hélice pour aéronef comportant des moyens de réglage de l'angle de pas des pales de l'hélice. De tels moyens de réglage permettent de régler le pas de chaque pale d'une hélice en fonction de la position angulaire de la pale lors de la rotation de l'hélice. L'invention concerne également un aéronef comportant au moins un tel système de propulsion.

### ÉTAT DE LA TECHNIQUE ANTÉRIEURE

Il est connu, pour des systèmes de propulsion à hélice pour aéronef, d'ajuster l'angle de pas des pales de l'hélice durant les différentes phases d'un vol. En effet, la modification du pas des pales de l'hélice permet d'ajuster la poussée du système de propulsion en fonction des différentes phases de vol de l'aéronef. Par exemple, il est possible de modifier le pas des pales entre la phase de décollage et la phase de vol horizontal à vitesse constante (appelée phase de croisière).

Pour ce faire, le système de propulsion comporte habituellement un système de contrôle du pas des pales de l'hélice d'un aéronef qui est conçu pour modifier de manière uniforme l'angle de pas de toutes les pales. Ainsi, la même variation d'angle de pas est appliquée à toutes les pales, quelle que soit la position angulaire des pales par rapport à un axe longitudinal du système de propulsion autour duquel l'hélice tourne.

Or, on observe de fortes distorsions du flux entrant devant l'hélice lors des différentes phases de vol. Même s'il est en outre connu d'incliner le système de propulsion pour gérer la distorsion du flux d'air entrant devant l'hélice, cette solution n'est efficace que pour une condition de vol donnée, à savoir la phase de croisière. Ainsi, les solutions de l'art antérieur ne sont pas optimales pour les autres phases de vol, et en particulier la phase de décollage de l'aéronef. En effet, lors de la phase de décollage, une distorsion importante du flux d'air entrant devant l'hélice subsiste. Il en résulte un flux entrant non axisymétrique vu par l'hélice et donc une charge non axisymétrique de chaque pale, ce qui représente un fort impact sur les niveaux de bruit et la directivité de l'aéronef. En particulier, les pales ascendantes et descendantes ne voient pas le même angle d'attaque local et ne produisent donc pas les mêmes charges. Cette différence de charges des pales ascendantes et descendantes entraîne une augmentation des charges stationnaires au niveau de l'aéronef et des charges vibratoires au niveau des pales.

La pale descendante, en particulier, génère un niveau de bruit important au sol.

Il est donc nécessaire de fournir une solution de réglage de l'angle de pas des pales d'une hélice d'un système de propulsion pour avion qui permette de modifier le pas des pales de l'hélice de sorte à optimiser la charge produite par chaque pale et limiter le bruit généré par l'hélice.

Les documents DE 198 41 853 B4, EP 1 153 828 A2, CA 3 024 684 A1 et US 7 037 072 B2 décrivent des systèmes de propulsion pour aéronef selon l'art antérieur.

### EXPOSÉ DE L'INVENTION

Un objet de la présente invention est de proposer un système de propulsion à hélice pour aéronef qui permette un réglage optimal de l'angle de pas des pales de l'hélice.

À cet effet, est proposé un système de propulsion selon la revendication 1.

Un tel système de propulsion permet un réglage cyclique (c'est-à-dire qui se répète à chaque tour d'hélice) de l'angle de pas de chaque pale en fonction de sa position angulaire autour de l'axe longitudinal. Un tel réglage cyclique permet d'adapter l'angle de pas des pales durant un tour complet d'hélice autour de l'axe longitudinal de sorte que l'hélice puisse fournir une poussée optimale sur les pales quelle que soit la phase de vol de l'aéronef. De plus, un tel réglage de l'angle de pas des pales en fonction de leurs positions angulaires autour de l'axe longitudinal permet de fournir un angle de pas différent aux pales ascendantes et aux pales descendantes dans le but d'adapter la charge appliquée à chaque pale de l'hélice et ainsi réduire l'impact de la distorsion du flux entrant devant l'hélice lors de la phase de décollage. Cela permet donc de réduire de manière importante le bruit engendré par l'hélice lors de cette phase de vol.

Avantageusement, lesdits premiers moyens de réglage comportent un galet globalement tubulaire s'étendant globalement coaxialement audit axe longitudinal, ledit galet comportant, sur une surface externe, un logement configuré pour recevoir des pieds desdites pales, ledit logement s'étendant selon un premier plan dont l'angle, par rapport à un plan perpendiculaire à un plan de référence dans lequel est compris ledit axe longitudinal, est compris entre -15° et +15°, cela afin de modifier l'angle de pas de chaque pale en fonction de la position angulaire de chaque pale autour dudit axe longitudinal.

Selon un premier mode de réalisation de l'invention, ledit galet est monté fixe en rotation autour dudit axe longitudinal et ledit logement se présente sous la forme d'une rainure s'étendant globalement dans ledit premier plan, où lesdits pieds desdites pales sont reçus dans ladite rainure de sorte que lesdites pales pivotent autour dudit galet et autour dudit axe longitudinal, et où l'angle dudit premier plan par rapport audit plan perpendiculaire est fixe, non nul, et compris entre -15 et +15°.

Selon un deuxième mode de réalisation de l'invention, ledit galet est monté fixe en rotation autour dudit axe longitudinal et ledit logement se présente sous la forme d'une rainure s'étendant globalement dans ledit premier plan, où lesdits pieds desdites pales sont reçus dans ladite rainure de sorte que lesdites pales pivotent autour dudit galet et autour dudit axe longitudinal, et où lesdits premiers moyens de réglage sont configurés pour modifier l'angle dudit premier plan par rapport audit plan perpendiculaire entre -15 et +15°.

Selon un aspect particulier de ce deuxième mode de réalisation, lesdits premiers moyens de réglage comportent un tube de transfert s'étendant globalement coaxialement audit axe longitudinal, où ledit galet est monté mobile en rotation sur ledit tube de transfert autour d'un axe de rotation perpendiculaire audit axe longitudinal, où ledit tube de transfert comporte un premier vérin comportant une première chambre de vérin délimitée par des parois dudit tube de transfert et un premier piston de vérin reçu dans ladite première chambre de vérin et monté mobile en translation selon ledit axe longitudinal dans ladite première chambre de vérin, et où une extrémité libre dudit premier piston de vérin est reliée, via une première biellette, audit galet de sorte à faire pivoter ledit galet par rapport audit tube de transfert autour dudit axe de rotation et modifier l'angle dudit premier plan par rapport audit plan perpendiculaire.

Selon un troisième mode de réalisation de l'invention, ledit galet est monté mobile en rotation autour dudit axe longitudinal et ledit logement se présente sous la forme d'une pluralité de logements individuels s'étendant globalement dans ledit premier plan, où un pied de chaque pale est reçu dans un desdits logements de sorte que lesdites pales pivotent avec ledit galet autour dudit axe longitudinal et où lesdits premiers moyens de réglage sont configurés pour modifier l'angle dudit premier plan par rapport audit plan perpendiculaire entre -15 et +15°. Selon un aspect particulier de ce troisième mode de réalisation, lesdits premiers moyens de réglage comportent un tube de transfert monté mobile en rotation autour dudit axe longitudinal, où ledit galet est monté mobile en rotation autour dudit axe longitudinal et mobile en rotation sur ledit tube de transfert autour d'un axe de rotation perpendiculaire audit axe longitudinal, où lesdits premiers moyens de réglage comportent en outre un tube de transfert auxiliaire monté fixe en rotation par rapport audit axe longitudinal et s'étendant coaxialement audit tube de transfert, où ledit tube de transfert est monté mobile en rotation autour dudit axe longitudinal à l'intérieur dudit tube de transfert auxiliaire, et où ledit tube de transfert auxiliaire comporte un deuxième vérin comportant une deuxième chambre de vérin délimitée par des parois dudit tube de transfert auxiliaire et un deuxième piston de vérin reçu dans ladite deuxième chambre de vérin et monté mobile en translation dans ladite deuxième chambre de vérin, et où une extrémité libre dudit deuxième piston de vérin est reliée, via une deuxième biellette, audit galet de sorte à faire pivoter ledit galet par rapport audit tube de transfert autour dudit axe de rotation et modifier l'angle dudit premier plan par rapport audit plan perpendiculaire.

Selon un autre aspect particulier de ce troisième mode de réalisation, ledit galet comporte une face latérale s'étendant globalement parallèlement audit premier plan et lesdits premiers moyens de réglage comportent une platine présentant une forme sensiblement correspondante à la forme de ladite face latérale, ladite platine étant montée de manière coaxiale audit galet, où ladite platine est montée fixe en rotation selon l'axe longitudinal et par rapport audit galet, et où ladite platine comporte un logement configuré pour recevoir une extrémité de la dite deuxième biellette opposée audit deuxième piston de vérin.

Selon un aspect particulier de l'invention, le système comporte en outre des deuxièmes moyens de réglage de l'angle de pas desdites pales, lesdits deuxièmes moyens de réglage étant configurés pour déplacer ledit galet en translation le long dudit axe longitudinal de sorte à modifier uniformément et simultanément l'angle de pas de toutes les pales de ladite hélice. Selon un autre aspect particulier, le système comporte un carter et lesdits deuxièmes moyens de réglage comportent un troisième vérin comportant :
- une troisième chambre de vérin s'étendant coaxialement audit axe longitudinal et délimitée par des parois dudit carter, et
- un troisième piston de vérin formé par une portion dudit tube de transfert, ledit troisième piston de vérin étant reçu dans ladite troisième chambre de vérin et étant monté mobile en translation le long de l'axe longitudinal dans ladite troisième chambre de vérin, où ledit galet est destiné à être déplacé le long de l'axe longitudinal lors du déplacement dudit troisième piston de vérin.

L'invention propose également un aéronef comportant au moins un système de propulsion tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante de plusieurs exemples de réalisation, ladite description étant faite en relation avec les dessins joints, parmi lesquels :
La figure 1 est une vue de côté d'un aéronef mettant en œuvre un système de propulsion pour aéronef selon l'invention ;
La figure 2 est une vue de côté et en coupe d'un système de propulsion selon un premier mode de réalisation de l'invention ;
La figure 3 est une vue de côté et en coupe d'un système de propulsion selon un deuxième mode de réalisation de l'invention, les premiers moyens de réglage étant en position initiale ;
La figure 4 est une vue de côté et en coupe du système de propulsion de la figure 3, les premiers moyens de réglage étant dans une position pivotée ;
La figure 5 est une vue en perspective et en coupe du système de propulsion de la figure 3 ;
La figure 6 est une vue en perspective et en coupe du système de propulsion de la figure 4 ;
La figure 7 est une vue de côté et en coupe d'une variante du système de propulsion selon le deuxième mode de réalisation de l'invention, les premiers moyens de réglage étant en position initiale ;
La figure 8 est une vue de côté et en coupe d'un système de propulsion selon un troisième mode de réalisation de l'invention, les premiers moyens de réglage étant en position initiale ; et
La figure 9 est une vue de côté et en coupe du système de propulsion de la figure 8, les premiers moyens de réglage étant dans une position pivotée.

### EXPOSÉ DÉTAILLÉ DE MODES DE RÉALISATION

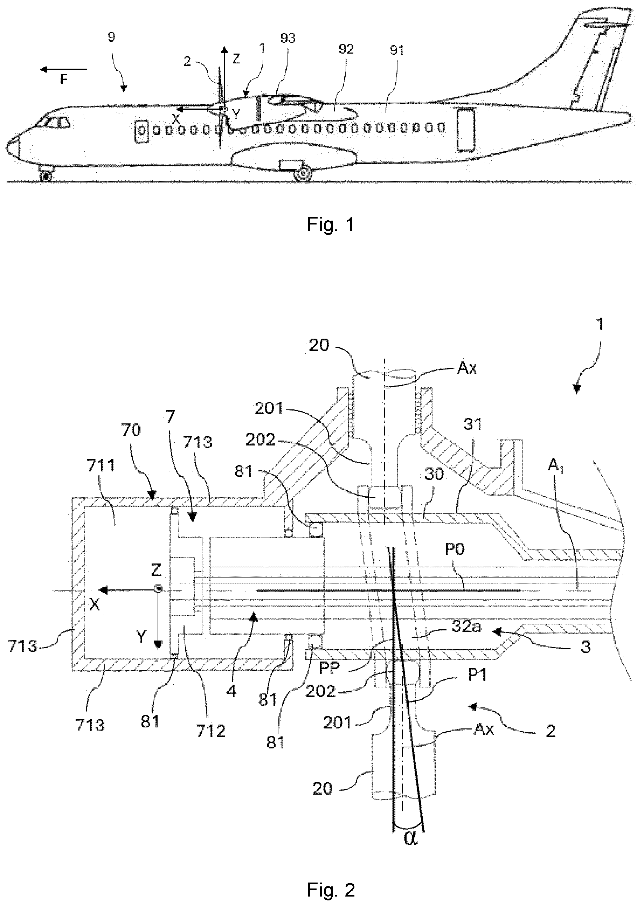

La figure 1 montre un aéronef 9 qui présente un fuselage 91 de part et d'autre duquel est fixée une aile 92. Sous chaque aile 92 est fixé au moins un système 1 de propulsion selon l'invention par l'intermédiaire d'un mât réacteur 93.

Dans la description qui suit, les termes relatifs à une position sont pris en référence à un aéronef en position normale de vol, c'est-à-dire comme il est représenté sur la figure 1 et les positions « avant » et « arrière » sont prises par rapport à l'avant et l'arrière du système 1 de propulsion et par rapport à la direction d'avancement F de l'aéronef 9 lorsque le système 1 de propulsion fonctionne.

Dans la description qui suit, et par convention, on appelle X 1a direction longitudinale du système de propulsion qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles. Dans les modes de réalisation de l'invention présentés ici, le système 1 de propulsion prend la forme d'un moteur à combustion comportant une hélice 2 montée sur l'arbre moteur du moteur à combustion. Le système 1 de propulsion présente ici un plan médian vertical XZ et un plan médian horizontal XY.

Comme illustré sur les figures 2 à 9, le système 1 de propulsion (ci-après appelé système) pour aéronef 9 comporte un axe longitudinal A₁ qui s'étend globalement parallèlement à l'axe X. Le système 1 comporte une hélice 2 qui est montée mobile en rotation autour de l'axe longitudinal A₁ et qui comporte une pluralité de pales 20 présentant chacune un axe Ax de pale s'étendant globalement perpendiculairement à l'axe longitudinal A₁. Classiquement, l'axe de pale Ax est défini par une droite passant par le pied 201 de pale et l'extrémité (non illustrée) de pale et les pales 20 sont distribuées angulairement autour de l'axe longitudinal A₁.

Selon l'invention, le système 1 comporte des premiers moyens 3 de réglage de l'angle de pas des pales 20 qui sont configurés pour modifier l'angle de pas de chaque pale 20 en fonction de sa position angulaire autour de l'axe longitudinal A₁ du système 1. L'angle de pas d'une pale est défini par son orientation par rapport à l'axe de pale Ax. Ainsi, l'angle de pale est modifié par pivotement de la pale 20 autour de son axe de pale Ax.

Pour ce faire, les premiers moyens 3 de réglage comportent un galet 30 globalement tubulaire s'étendant globalement coaxialement à l'axe longitudinal A₁. Le galet 30 comporte, sur une surface externe 31, un logement 32a, 32b configuré pour recevoir les pieds 201 des pales 20. Le logement 32a, 32b, qui comme décrit plus en détails en relation avec les différents modes de réalisation, peut prendre la forme d'une rainure ou d'une pluralité d'encoches, s'étend globalement dans un premier plan P1. Le premier plan P1 présente un angle α par rapport à un plan perpendiculaire PP qui s'étend perpendiculairement à un plan de référence P0 dans lequel est compris l'axe longitudinal A₁. Le premier plan P1 présente un angle α non nul qui est compris entre -15° et +15°, en particulier entre -5° et +5°, par exemple sensiblement égal à -2° ou +2°. Plus précisément, le plan de référence P0 est un plan globalement parallèle au plan médian vertical XZ tandis que le plan perpendiculaire PP est un plan globalement parallèle au plan vertical YZ.

Ainsi, l'inclinaison du premier plan P1 dans lequel s'étend le logement 32a, 32b permet, lors de la rotation de l'hélice 2, de modifier l'angle de pas de chaque pale 20 en fonction de sa position angulaire autour de l'axe longitudinal A₁.

De cette manière, l'invention permet un réglage cyclique (c'est-à-dire qui se répète à chaque tour d'hélice 2) de l'angle de pas de chaque pale 20 en fonction de sa position angulaire autour de l'axe longitudinal A₁. Par exemple, l'angle de pas d'une pale 20 est différent lorsque la pale 20 se situe à 3h, à 6, à 9h ou à 12h autour de l'axe longitudinal A₁.

Un tel réglage cyclique permet d'adapter (c'est-à-dire de faire varier) l'angle de pas des pales 20 durant un tour complet d'hélice 2 autour de l'axe longitudinal A₁ de sorte que l'hélice 2 puisse fournir une poussée optimale sur les pales quelle que soit la phase de vol de l'aéronef 9. De plus, un tel réglage de l'angle de pas des pales en fonction de leurs positions angulaires autour de l'axe longitudinal A₁ permet de fournir un angle de pas différent aux pales ascendantes et aux pales descendantes dans le but d'adapter la charge appliquée à chaque pale 20 de l'hélice 2 et ainsi réduire l'impact de la distorsion du flux entrant devant l'hélice lors de la phase de décollage. Cela permet donc de réduire de manière importante le bruit engendré par l'hélice 2 lors de cette phase de vol.

La figure 2 est une vue en coupe selon le plan horizontal XY illustrant un premier mode de réalisation d'un système 1 selon l'invention. Dans ce premier mode de réalisation, le galet 30 est monté fixe en rotation autour de l'axe longitudinal A₁ et le logement 32a se présente sous la forme d'une rainure. La rainure 32a est formée sur l'ensemble de la périphérie du galet 30 au niveau de la surface extérieure 31 et s'étend globalement dans le premier plan P1. Les pieds 201 des pales 20 sont reçus dans la rainure 32a de sorte que les pales 20 pivotent autour du galet 30 et autour de l'axe longitudinal A₁. De plus, l'angle α du premier plan P1 par rapport au plan perpendiculaire PP est ici fixe, non nul, et compris entre -15° et +15°, en particulier entre -5° et +5°, par exemple sensiblement égal à -2° ou +2°. Dans l'exemple illustré sur la figure 2, l'angle α du premier plan P1 par rapport au plan perpendiculaire PP est de 5°.

Les pales 20 de l'hélice 2 tournent donc autour du galet 30 et ont leurs pieds 201 qui se déplacent au sein de la rainure 32a du galet 30 lors de la rotation de l'hélice 2. La rainure 32a s'étend dans le premier plan P1 qui est incliné d'un angle α par rapport au plan perpendiculaire PP de sorte que le déplacement d'un pied 201 de pale 20 dans la rainure 32a lors d'une rotation complète de l'hélice 2 autour de l'axe longitudinal A₁ ne s'effectue pas parallèlement au plan perpendiculaire PP. Ainsi, en fonction de la position angulaire d'une pale 20, le pied 201 de cette pale 20 va se trouver, durant la rotation de l'hélice 2, aligné avec le plan perpendiculaire PP puis décalé d'un côté ou de l'autre du plan perpendiculaire PP (comme illustré sur la figure 2). Ce déplacement du pied 201 de pale par rapport au plan perpendiculaire PP engendre une modification de l'angle de pas des pales 20 durant la rotation de l'hélice 2 autour de l'axe longitudinal A₁.

Dans ce mode de réalisation, le galet 30 est fixe en rotation par rapport à l'axe Z. C'est donc l'inclinaison de la rainure 32a formée dans le galet 30 qui définit l'angle α entre le premier plan P1 et le plan perpendiculaire PP. En fonction de l'angle α souhaité, il est donc nécessaire d'utiliser un galet 30 présentant une rainure 32a correspondante. L'angle α de la rainure 32a (correspondant à l'angle α du premier plan P1) par rapport au plan perpendiculaire PP est sélectionné pour obtenir des performances optimales en termes de poussée et de bruit engendré par l'hélice 2.

Dans cet exemple, la rainure 32a s'étend de manière globalement rectiligne et parallèle au premier plan P1, on pourrait toutefois envisager la mise en œuvre d'une rainure plus complexe, présentant par exemple des portions courbées, de sorte à gérer des effets de charge de pale plus complexes (effet d'aile, effet d'entrée d'air, etc.).

Par ailleurs, et comme illustré sur la figure 2, le système 1 comporte en outre un carter 70 qui forme, dans cet exemple, le moyeu de l'hélice 2 et qui porte donc les pales 20. Le carter 70 tourne autour de l'axe longitudinal A₁, et donc autour du galet 30 qui est fixe en rotation par rapport à l'axe longitudinal A₁. Le carter 70 peut être entraîné en rotation par une boîte de vitesse (non illustrée) du système 1 de propulsion, par exemple.

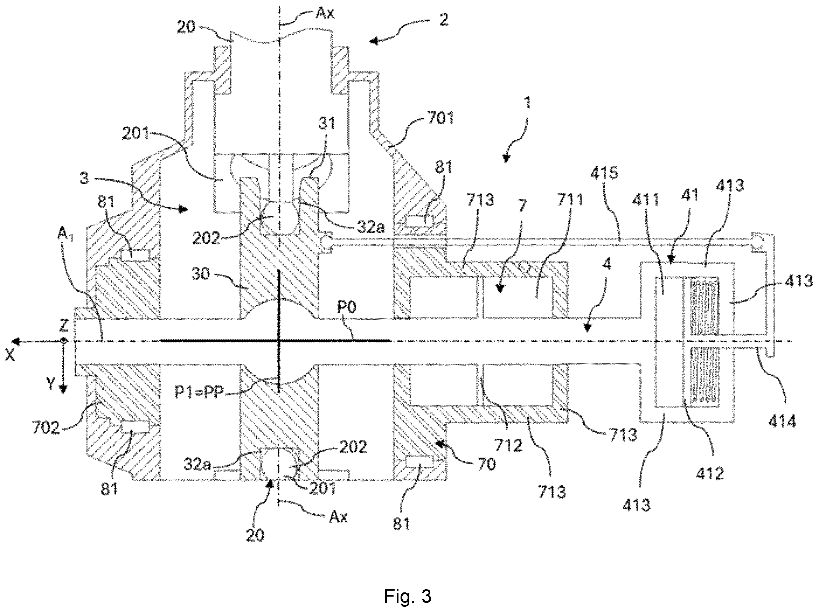

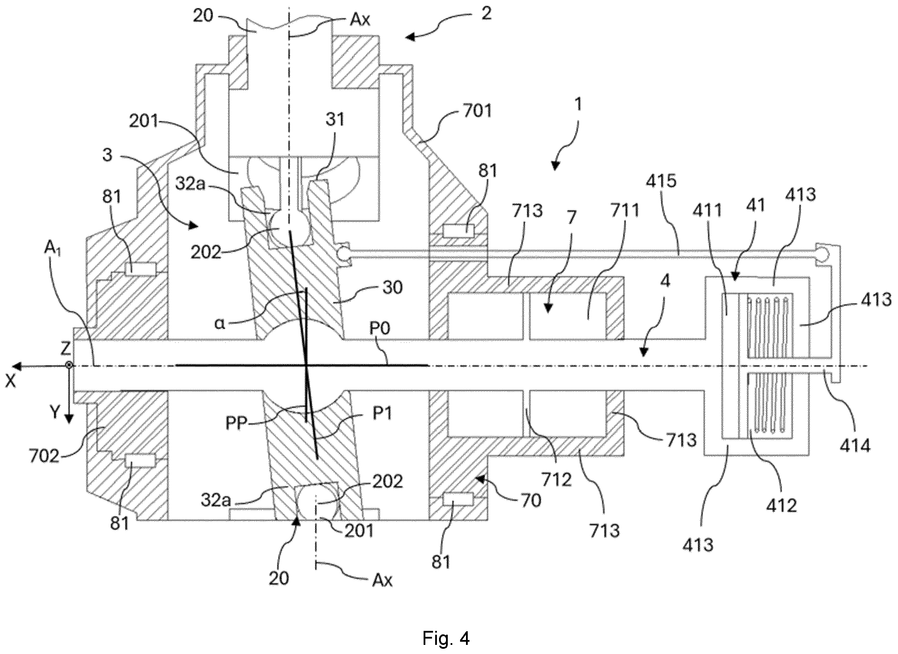

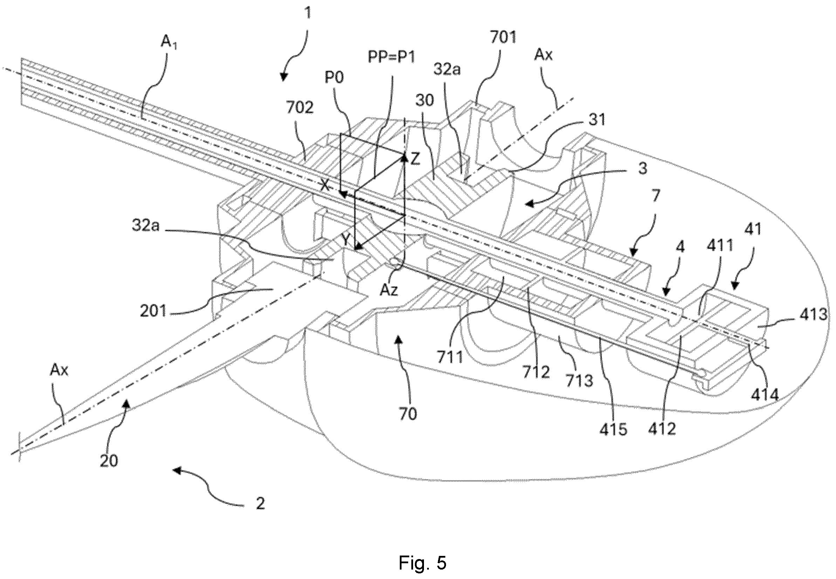

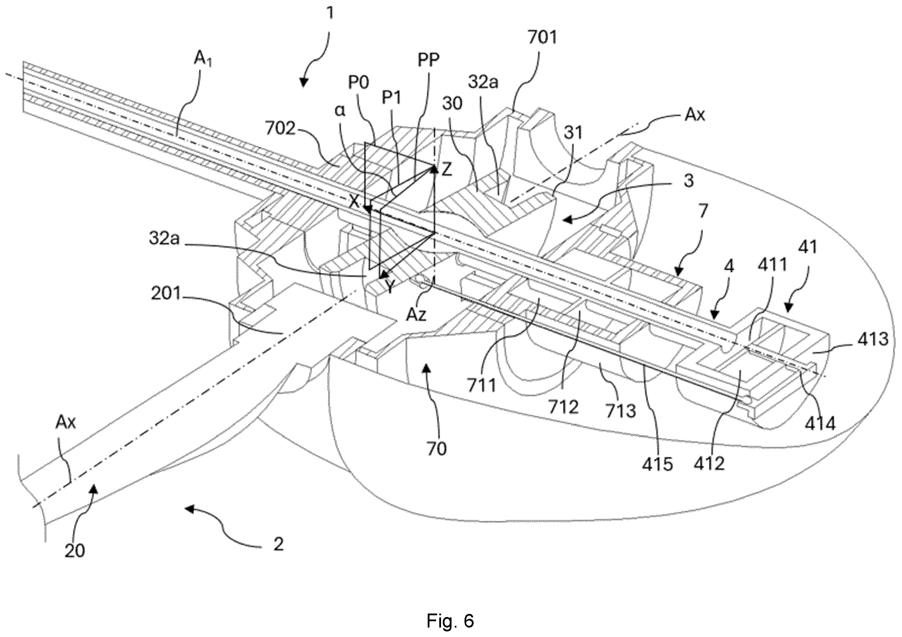

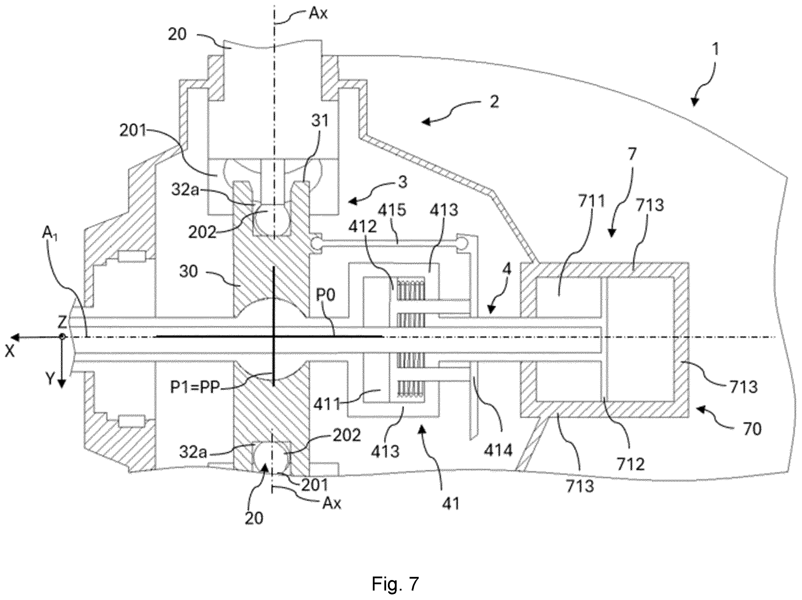

Les figures 3 à 7 illustrent un deuxième mode de réalisation du système 1 de propulsion selon l'invention. Plus précisément, les figures 3 et 4 illustrent une vue en coupe selon le plan horizontal XY du système 1 avec les premiers moyens 3 de réglage respectivement en position initiale et en position pivotée. Les figures 5 et 6 illustrent une vue en perspective et en coupe selon le plan horizontal XY du système 1 avec les premiers moyens 3 de réglage respectivement en position initiale et en position pivotée. La figure 7 illustre une variante du deuxième mode de réalisation.

Dans ce deuxième mode de réalisation, le galet 30 est monté fixe en rotation autour de l'axe longitudinal A₁ et le logement 32a se présente sous la forme d'une rainure s'étendant globalement dans le premier plan P1. Comme précédemment, la rainure 32a est formée sur l'ensemble de la périphérie du galet 30 au niveau de la surface extérieure 31 et s'étend globalement dans le premier plan P1. Les pieds 201 des pales 20 sont reçus dans la rainure 32a de sorte que les pales 20 pivotent autour du galet 30 et autour de l'axe longitudinal A₁ lors de la rotation de l'hélice 2. Les premiers moyens 3 de réglage sont configurés pour modifier l'angle α du premier plan P1 par rapport au plan perpendiculaire PP entre -15° et +15°, en particulier entre -5° et +5°, par exemple sensiblement égal à -2° ou +2°. Plus précisément, les premiers moyens 3 de réglage sont mobiles entre une position initiale (illustrée sur les figures 3 et 5), dans laquelle l'angle α du premier plan P1 par rapport au plan perpendiculaire PP est nul (c'est-à-dire que le premier plan P1 s'étend parallèlement au plan perpendiculaire PP), et une position pivotée (illustrée sur les figures 4 et 6), dans laquelle l'angle α du premier plan P1 par rapport au plan perpendiculaire PP est non nul et compris entre -15° et +15°.

En d'autres termes, la rainure 32a s'étend dans le premier plan P1 qui est ici mobile (en l'occurrence pivotable) via les premiers moyens 3 de réglage d'un angle α par rapport au plan perpendiculaire PP. Lorsque le premier plan P1 est dans une position pivotée, le déplacement d'un pied 201 de pale 20 dans la rainure 32a lors d'une rotation complète de l'hélice 2 autour de l'axe longitudinal A₁ ne s'effectue donc pas parallèlement au plan perpendiculaire PP. Dans ce cas, en fonction de la position angulaire d'une pale 20, le pied 201 de cette pale 20 va se trouver aligné avec le plan perpendiculaire PP puis décalé d'un côté ou de l'autre du plan perpendiculaire PP (comme illustré sur la figure 4). Ce déplacement du pied 201 de pale par rapport au plan perpendiculaire PP engendre une modification de l'angle de pas de la pale 20 durant la rotation de l'hélice 2 autour de l'axe longitudinal A₁.

De cette manière, les premiers moyens 3 de réglage permettent de fournir un réglage différent de l'angle de pas des pales 20 d'une hélice 2 selon la phase de vol de l'aéronef. Par exemple, durant la phase de croisière, les premiers moyens 3 de réglage peuvent être placés dans leur position initiale de sorte que l'angle de pas est globalement identique pour toutes les pales 20. Durant la phase de décollage de l'aéronef 9, les premiers moyens 3 de réglage peuvent être placés dans une position pivotée, où l'angle α du premier plan P1 par rapport au plan perpendiculaire PP est non nul et compris entre -15° et +15°, en particulier entre -5° et +5°, par exemple sensiblement égal à -2° ou +2°, de sorte que l'angle de pas d'une pale 20 varie en fonction de sa position angulaire, cela pour limiter le bruit de l'hélice 2, par exemple.

Dans cet exemple, la rainure 32a s'étend de manière globalement rectiligne et parallèle au premier plan P1, on pourrait toutefois envisager la mise en œuvre d'une rainure 32a plus complexe, présentant par exemple des portions courbées, de sorte à gérer des effets de charge de pale plus complexes (effet d'aile, effet d'entrée d'air, etc.).

De sorte à permettre au galet 30 de passer de la position initiale à la position pivotée (et inversement), les premiers moyens 3 de réglage comportent un tube de transfert 4 qui s'étend globalement coaxialement à l'axe longitudinal A₁. Le galet 30 est monté mobile en rotation sur le tube de transfert 4 et autour d'un axe Az de rotation (visible sur les figures 5 et 6) s'étendant perpendiculairement à l'axe longitudinal A₁. Plus précisément, l'axe de rotation Az du galet 30 est globalement parallèle à l'axe vertical Z.

Le tube de transfert 4 comporte un premier vérin 41 qui comporte une première chambre de vérin 411 délimitée par des parois 413 du tube de transfert 4 et un premier piston de vérin 412 reçu dans la première chambre de vérin 411 et monté mobile en translation selon l'axe longitudinal A₁ dans la première chambre de vérin 411. Une extrémité libre 414 du premier piston de vérin 412 est reliée, via une première biellette 415, au galet 30 de sorte à faire pivoter le galet 30 par rapport au tube de transfert 4 autour de l'axe de rotation Az lorsque le premier piston de vérin 412 se déplace dans la première chambre de vérin 411. Lors du déplacement du premier piston de vérin 412 dans la première chambre de vérin 411, le galet 30 est pivoté (en étant poussé ou tiré par la première biellette 415 selon le sens de déplacement du premier piston de vérin 412) autour de l'axe Az de rotation de sorte à modifier l'angle α du premier plan P1 par rapport au plan perpendiculaire PP.

Afin de permettre le déplacement du premier piston de vérin 412 au sein de la première chambre de vérin 411, le tube de transfert 4 comporte des canaux d'alimentation d'un fluide qui alimente la première chambre de vérin 411. Le premier vérin 41 peut être du type simple effet et comporter un ressort (comme illustré) ou du type double effet (non illustré).

Par ailleurs, et comme illustré sur les figures 3 à 6, le système 1 selon le deuxième mode de réalisation de l'invention comporte un carter 70 qui comporte, dans cet exemple, un moyeu 701 qui porte les pales 20 et un châssis fixe 702 qui s'étend coaxialement à l'axe longitudinal A₁. Le moyeu 701 est monté mobile en rotation autour du châssis fixe 702 et autour de l'axe longitudinal A₁.

Le moyeu 701 tourne autour de l'axe longitudinal A₁, et donc autour du galet 30. Le moyeu 701 est par exemple entraîné en rotation par une boîte de vitesse (non illustrée) du système 1 de propulsion. Dans cet exemple, les parois 413 du tube de transfert 4 délimitant la première chambre de vérin 411 sont disposées en dehors du carter 70. Seule la première biellette 415 s'étend à partir de l'extrémité libre 414 du premier piston de vérin 411 jusqu'au galet 30 situé à l'intérieur du carter 70.

Dans une variante, illustrée sur la figure 7, de ce deuxième mode de réalisation, le système 1 comporte aussi un carter 70 qui forme, dans cet exemple, un moyeu qui porte les pales 20. Le carter 70 tourne autour de l'axe longitudinal A₁, et donc autour du tube de transfert 4 et du galet 30 qui sont fixes en rotation par rapport à l'axe longitudinal A₁. Dans cette variante, il n'y a pas de châssis fixe et les parois 413 du tube de transfert 4 délimitant la première chambre de vérin 411 sont disposées dans le carter 70, ce qui simplifie la structure du système 1 puisqu'il n'est ici plus nécessaire de faire passer la première biellette 415 à travers un châssis fixe ni de fournir une liaison entre un châssis fixe et le moyeu permettant la rotation du moyeu autour du châssis fixe.

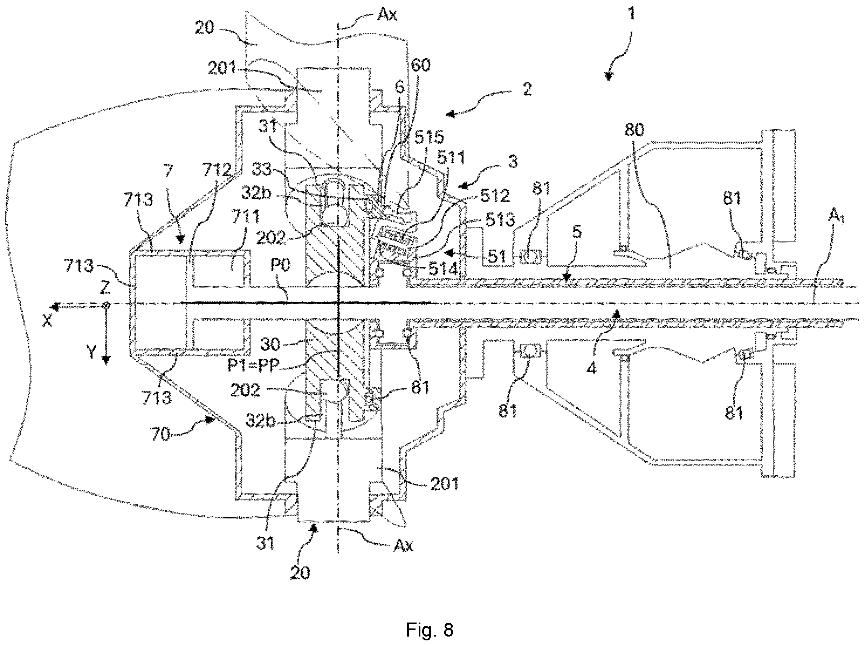

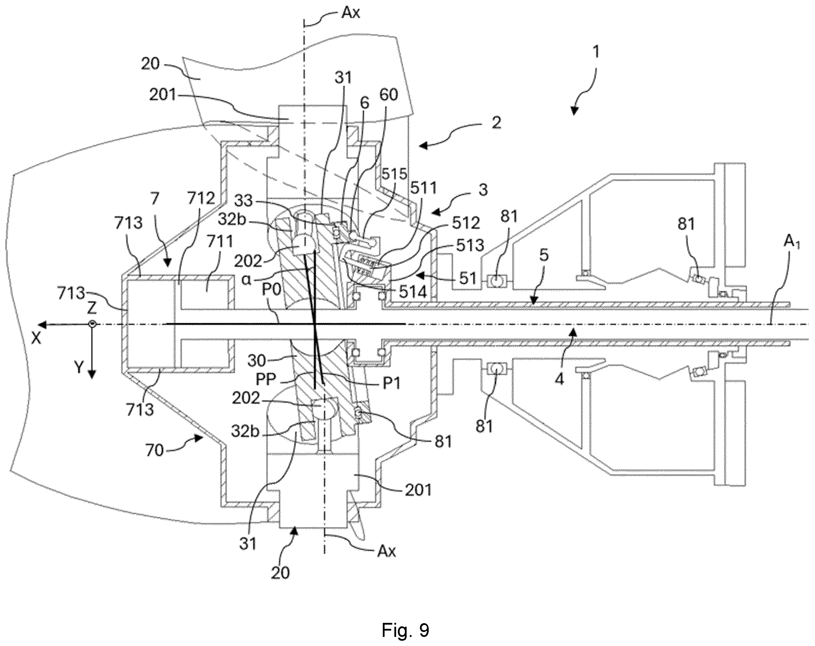

Les figures 8 et 9 illustrent un troisième mode de réalisation du système 1 de propulsion selon l'invention. Plus précisément, les figures 8 et 9 illustrent une vue en coupe selon le plan horizontal XY du système 1 avec les premiers moyens 3 de réglage respectivement en position initiale et en position pivotée.

Dans ce troisième mode de réalisation, le galet 30 est monté mobile en rotation autour de l'axe longitudinal A₁ et le logement 32b se présente sous la forme d'une pluralité d'encoches 32b formant des logements individuels arrangés au niveau de la surface extérieure 31 du galet 30 et s'étendant globalement dans le premier plan P1. Ainsi le pied 201 de chaque pale 20 est reçu dans une des encoches 32b de sorte que les pales 20 pivotent avec le galet 30 autour de l'axe longitudinal A₁. En d'autres termes, le galet 30 tourne avec les pales 20 autour de l'axe longitudinal A₁ lors de la rotation de l'hélice 2.

Les premiers moyens 3 de réglage sont configurés pour modifier l'angle α du premier plan P1 par rapport au plan perpendiculaire PP entre -15° et +15°, en particulier entre -5° et +5°, par exemple sensiblement égal à -2° ou +2°. Comme précédemment, les premiers moyens 3 de réglage sont mobiles entre une position initiale (illustrée sur la Fig 8), dans laquelle l'angle α du premier plan P1 par rapport au plan perpendiculaire PP est égal à zéro (c'est-à-dire que le premier plan P1 s'étend parallèlement au plan perpendiculaire PP), et une position pivotée (illustrée sur la figure 9), dans laquelle l'angle α du premier plan P1 par rapport au plan perpendiculaire PP est non nul et compris entre -15° et +15°.

En d'autres termes, les encoches 32b s'étendent dans le premier plan P1 qui est ici mobile (en l'occurrence pivotable) via les premiers moyens 3 de réglage d'un angle α par rapport au plan perpendiculaire PP. Lorsque le premier plan P1 est dans une position pivotée, le déplacement d'un pied 201 de pale 20 dans une encoche 32b lors d'une rotation complète de l'hélice 2 autour de l'axe longitudinal A₁ ne s'effectue donc pas parallèlement au plan perpendiculaire PP. Dans ce cas, en fonction de la position angulaire d'une pale 20, le pied 201 de cette pale 20 va se trouver aligné avec le plan perpendiculaire PP puis décalé d'un côté ou de l'autre du plan perpendiculaire PP (comme illustré sur la figure 4). Ce déplacement du pied 201 de pale par rapport au plan perpendiculaire PP engendre une modification de l'angle de pas de la pale 20 durant la rotation de l'hélice 2 autour de l'axe longitudinal A₁.

De cette manière, les premiers moyens 3 de réglage permettent de fournir un réglage différent de l'angle de pas des pales 20 d'une hélice 2 selon la phase de vol de l'aéronef. Par exemple, durant la phase de croisière, les premiers moyens 3 de réglage peuvent être placés dans leur position initiale de sorte que l'angle de pas est globalement identique pour toutes les pales. Durant la phase de décollage de l'aéronef 9, les premiers moyens 3 de réglage peuvent être placés dans une position pivotée, où l'angle α du premier plan P1 par rapport au plan perpendiculaire PP est non nul et compris entre -15° et +15°, en particulier entre -5° et +5°, par exemple sensiblement égal à -2° ou +2°, de sorte que l'angle de pas d'une pale 20 varie en fonction de sa position angulaire, cela pour limiter le bruit de l'hélice 2, par exemple.

Les premiers moyens 3 de réglage comportent un tube de transfert 4 monté mobile en rotation autour de l'axe longitudinal A₁. Le galet 30 est monté mobile en rotation autour de l'axe longitudinal A₁ et mobile en rotation sur le tube de transfert 4 autour d'un axe Az de rotation perpendiculaire à l'axe longitudinal A₁. Plus précisément, l'axe de rotation Az du galet 30 est globalement parallèle à l'axe vertical Z.

Les premiers moyens 3 de réglage comportent en outre un tube de transfert auxiliaire 5 monté fixe en rotation par rapport à l'axe longitudinal A₁ et s'étendant coaxialement au tube de transfert 4. Plus précisément, le tube de transfert 4 est monté mobile en rotation autour de l'axe longitudinal A₁ à l'intérieur du tube de transfert auxiliaire 5.

En d'autres termes, les premiers moyens 3 de réglage comportent un tube de transfert auxiliaire 5 qui s'étend coaxialement à l'axe longitudinal A₁ et qui est monté fixe en rotation par rapport à ce dernier. Le tube de transfert 4 est monté à l'intérieur du tube de transfert auxiliaire 5 et est mobile en rotation autour de l'axe longitudinal A₁. Ainsi, le tube de transfert 4, le galet 30 et les pales 20 tournent ensemble autour de l'axe longitudinal A₁.

De sorte à permettre au galet 30 de passer de la position initiale à la position pivotée (et inversement), le tube de transfert auxiliaire 5 comporte un deuxième vérin 51 comportant une deuxième chambre de vérin 511 délimitée par des parois 513 du tube de transfert auxiliaire 5 et un deuxième piston de vérin 512 reçu dans la deuxième chambre de vérin 511 et monté mobile en translation dans la deuxième chambre de vérin 511. Une extrémité libre 514 du deuxième piston de vérin 512 est solidaire, via une deuxième biellette 515, du galet 30 de sorte à faire pivoter le galet 30 par rapport au tube de transfert 4 autour de l'axe Az de rotation et modifier l'angle α du premier plan P1 par rapport au plan perpendiculaire PP.

Ainsi, lors du déplacement du deuxième piston de vérin 512 dans la deuxième chambre de vérin 511, le galet 30 est pivoté (en étant poussé ou tiré par la deuxième biellette 515 selon le sens de déplacement du deuxième piston de vérin 512) de sorte à modifier l'angle α du premier plan P1 par rapport au plan perpendiculaire PP.

Afin de permettre le déplacement du deuxième piston de vérin 512 au sein de la deuxième chambre de vérin 511, le tube de transfert 4 et le tube de transfert auxiliaire 5 comportent des canaux d'alimentation d'un fluide qui alimente la deuxième chambre de vérin 511. Le deuxième vérin 51 peut être du type simple effet et comporter un ressort (comme illustré) ou du type double effet (non illustré).

Le tube de transfert auxiliaire 5 étant monté fixe par rapport à l'axe longitudinal A₁ et le galet 30 étant monté mobile autour de l'axe longitudinal A₁, il est nécessaire de fournir une liaison adaptée entre ces deux éléments. Pour ce faire, le galet 30 comporte une face latérale 33 s'étendant globalement parallèlement au premier plan P1. Les premiers moyens 3 de réglage comportent en outre une platine 6 présentant une forme sensiblement correspondante à la forme de la face latérale 33. La platine 6 est montée de manière coaxiale avec le galet 30. De plus, la platine 6 est montée fixe en rotation autour de l'axe longitudinal A₁ et par rapport au galet 30. Enfin, la platine 6 comporte un logement 60 configuré pour recevoir une extrémité de la deuxième biellette 515 opposée au deuxième piston de vérin 512.

De cette manière, la platine 6 peut donc pivoter avec le galet 30 autour de l'axe Az de rotation du galet 30. Le galet 30 peut ainsi tourner librement par rapport au tube de transfert auxiliaire 5 et la deuxième biellette 515 peut faire pivoter le galet 30 selon l'axe Az de rotation en appuyant ou en tirant sur la platine 6 qui est solidaire du galet 30.

Ce troisième mode de réalisation fournit donc une alternative aux solutions précédemment décrites dans laquelle le galet 30 tourne avec les pales 20 de l'hélice 2.

Par ailleurs, et comme illustré sur les figures 8 et 9, le système 1 comporte en outre un carter 70 qui forme, dans cet exemple, le moyeu de l'hélice 2 et qui porte donc les pales 20. Le carter 70 tourne autour de l'axe longitudinal A₁, avec le galet 30 et le tube de transfert 4. Le carter 70 est ici entrainé en rotation par un axe principal 80 relié par exemple à une boîte de vitesse (non illustrée) du système 1 de propulsion.

Le système 1 de propulsion de l'invention (et cela de façon compatible avec tous les modes de réalisation décrits précédemment) comporte en outre des deuxièmes moyens 7 de réglage de l'angle de pas des pales 20 qui sont configurés pour déplacer le galet 30 en translation le long de l'axe longitudinal A₁ de sorte à modifier uniformément et simultanément l'angle de pas de toutes les pales 20 de l'hélice 2.

Ainsi, l'invention peut combiner un réglage (via les deuxième moyens 7 de réglage) uniforme et simultané de toutes les pales 20 et un réglage additionnel individuel (via les premiers moyens 3 de réglage) de l'angle de pas de chaque pale en fonction de sa position angulaire autour de l'axe longitudinal A₁. En d'autres termes, l'invention fournit un réglage supplémentaire de l'angle de pas des pales 20 de sorte à optimiser, d'une part, les performances du système 1 de propulsion et, d'autre part, le bruit généré durant une phase de vol complète de l'aéronef. Afin de déplacer le galet 30 en translation le long de l'axe longitudinal A₁, le système 1 comporte un carter 70 et les deuxièmes moyens 7 de réglage comportent un troisième vérin 71. En particulier le troisième vérin 71 comporte :
- une troisième chambre de vérin 711 s'étendant coaxialement à l'axe longitudinal A₁ et délimitée par des troisièmes parois 713 du carter 70, et
- un troisième piston de vérin 712 formé par une portion du tube de transfert 4, le troisième piston de vérin 712 étant reçu dans la troisième chambre de vérin 711 et étant monté mobile en translation le long de l'axe longitudinal A₁ dans la troisième chambre de vérin 711.

Le galet 30 est donc destiné à être déplacé le long de l'axe longitudinal A₁ lors du déplacement du troisième piston de vérin 712. Ainsi, lors du déplacement du troisième piston de vérin 712 dans la troisième chambre de vérin 711, le galet 30 est déplacé en translation (vers l'avant ou vers l'arrière) le long de l'axe longitudinal A₁. Un tel déplacement du galet 30 le long de l'axe longitudinal A₁ permet de modifier la position des pieds 201 de pales de l'hélice 2 de sorte à modifier l'angle de pas des pales 20.

Afin de permettre le déplacement du troisième piston de vérin 712 au sein de la troisième chambre de vérin 711, le tube de transfert 4 comporte des canaux d'alimentation d'un fluide qui alimente la troisième chambre de vérin 711. Le troisième vérin 71 peut être du type double effet (comme illustré) ou du type simple effet (non illustré).

Dans le cas des premier, troisième, et deuxième (variante décrite en relation avec la figure 7) modes de réalisation décrits précédemment, les troisièmes chambres 711 sont ménagées dans le carter 70, où le carter 70 forme le moyeu de l'hélice 2. Le moyeu tourne donc autour de l'axe longitudinal A₁.

Dans le cas du deuxième mode de réalisation (variante décrite en relation avec les figures 3 à 6), les troisièmes parois 713 du carter 70 sont ménagées dans le châssis fixe 702 qui ne tourne pas autour de l'axe longitudinal A₁.

De préférence, dans les deuxièmes et troisièmes modes de réalisation précédemment décrits, la liaison entre le galet 30 et le tube de transfert 4 se présente sous la forme d'une liaison rotule de sorte à limiter les frictions entre le galet 30 et le tube de transfert 4.

De préférence encore, et quel que soit le mode de réalisation de l'invention, les pieds 201 des pales 20 portent chacun un pion 202 destiné à être reçu dans le logement 32a, 32b du galet 30. Dans les exemples illustrés, et afin de limiter la friction entre les pales 20 et le logement 32a, 32b du galet 30, le pion 202 présente une forme sensiblement circulaire. L'utilisation d'un lubrifiant peut également être envisagée pour limiter les frictions entre les pales 20 et le logement 32a, 32b du galet 30.

De préférence, des mécanismes de roulements 81 sont mis en œuvre entre les pièces qui tournent les unes par rapport aux autres, comme par exemple entre le châssis fixe 702 et le moyeu 701 ou entre la platine 6 et le galet 30, de sorte à limiter les frictions et ainsi augmenter le rendement du système 1 de propulsion.

## Revendications

1. Système (1) de propulsion pour aéronef comportant un axe longitudinal (A₁) et :
- une hélice (2) montée mobile en rotation autour dudit axe longitudinal (A₁) ladite hélice (2) comportant une pluralité de pales (20) présentant chacune un axe (Ax) de pale s'étendant globalement perpendiculairement à l'axe longitudinal (A₁), lesdites pales (20) étant distribuées angulairement par rapport audit axe longitudinal (A₁) ; et
- des premiers moyens (3) de réglage de l'angle de pas desdites pales (20), lesdits premiers moyens (3) de réglage étant configurés pour modifier l'angle de pas de chaque pale (20) en fonction de la position angulaire de chaque pale (20) autour dudit axe longitudinal (A₁),
**caractérisé en ce que** lesdits premiers moyens (3) de réglage comportent un galet (30) globalement tubulaire s'étendant globalement coaxialement audit axe longitudinal (A₁), ledit galet (30) comportant, sur une surface externe (31), un logement (32a, 32b) configuré pour recevoir des pieds (201) desdites pales (20), ledit logement (32a, 32b) s'étendant selon un premier plan (P1) dont l'angle (α) non nul, par rapport à un plan perpendiculaire (PP) à un plan de référence (P0) dans lequel est compris ledit axe longitudinal (A₁), est compris entre -15° et +15°.

2. Système (1) selon la revendication 1, **caractérisé en ce que** ledit galet (30) est monté fixe en rotation autour dudit axe longitudinal (A₁) et **en ce que** ledit logement (32a) se présente sous la forme d'une rainure s'étendant globalement dans ledit premier plan (P1),
où lesdits pieds (201) desdites pales (20) sont reçus dans ladite rainure de sorte que lesdites pales (20) pivotent autour dudit galet (30) et autour dudit axe longitudinal (A₁),
et où l'angle (α) dudit premier plan (P1) par rapport audit plan perpendiculaire (PP) est fixe, non nul, et compris entre -15° et +15°.

3. Système (1) selon la revendication 1, **caractérisé en ce que** ledit galet (30) est monté fixe en rotation autour dudit axe longitudinal (A₁) et **en ce que** ledit logement (32a) se présente sous la forme d'une rainure s'étendant globalement dans ledit premier plan (P1),
où lesdits pieds (201) desdites pales (20) sont reçus dans ladite rainure de sorte que lesdites pales (20) pivotent autour dudit galet (30) et autour dudit axe longitudinal (A₁),
et où lesdits premiers moyens (3) de réglage sont configurés pour modifier l'angle (α) dudit premier plan (P1) par rapport audit plan perpendiculaire (PP) entre -15° et +15°.

4. Système (1) selon la revendication 3, **caractérisé en ce que** lesdits premiers moyens (3) de réglage comportent un tube de transfert (4) s'étendant globalement coaxialement audit axe longitudinal (A₁), où ledit galet (30) est monté mobile en rotation sur ledit tube de transfert (4) autour d'un axe (Az) de rotation perpendiculaire audit axe longitudinal (A₁),
où ledit tube de transfert (4) comporte un premier vérin (41) comportant une première chambre de vérin (411) délimitée par des parois (413) dudit tube de transfert (4) et un premier piston de vérin (412) reçu dans ladite première chambre de vérin (411) et monté mobile en translation selon ledit axe longitudinal (A₁) dans ladite première chambre de vérin (411), et où une extrémité libre (414) dudit premier piston de vérin (412) est reliée, via une première biellette (415), audit galet (30) de sorte à faire pivoter ledit galet (30) par rapport audit tube de transfert (4) autour dudit axe (Az) de rotation et modifier l'angle (α) dudit premier plan (P1) par rapport audit plan perpendiculaire (PP).

5. Système (1) selon la revendication 1, **caractérisé en ce que** ledit galet (30) est monté mobile en rotation autour dudit axe longitudinal (A₁) et **en ce que** ledit logement (32b) se présente sous la forme d'une pluralité de logements individuels s'étendant globalement dans ledit premier plan (P1),
où un pied (201) de chaque pale (20) est reçu dans un desdits logements (32b) de sorte que lesdites pales (20) pivotent avec ledit galet (30) autour dudit axe longitudinal (A₁) et où lesdits premiers moyens (3) de réglage sont configurés pour modifier l'angle (α) dudit premier plan (P1) par rapport audit plan perpendiculaire (PP) entre -15° et +15°.

6. Système (1) selon la revendication 5, **caractérisé en ce que** lesdits premiers moyens (3) de réglage comportent un tube de transfert (4) monté mobile en rotation autour dudit axe longitudinal (A₁), où ledit galet (30) est monté mobile en rotation autour dudit axe longitudinal (A₁) et mobile en rotation sur ledit tube de transfert (4) autour d'un axe (Az) de rotation perpendiculaire audit axe longitudinal (A₁),
où lesdits premiers moyens (3) de réglage comportent en outre un tube de transfert auxiliaire (5) monté fixe en rotation par rapport audit axe longitudinal (A₁) et s'étendant coaxialement audit tube de transfert (4), où ledit tube de transfert (4) est monté mobile en rotation autour dudit axe longitudinal (A₁) à l'intérieur dudit tube de transfert auxiliaire (5),
et où ledit tube de transfert auxiliaire (5) comporte un deuxième vérin (51) comportant une deuxième chambre de vérin (511) délimitée par des parois (513) dudit tube de transfert auxiliaire (5) et un deuxième piston de vérin (512) reçu dans ladite deuxième chambre de vérin (511) et monté mobile en translation dans ladite deuxième chambre de vérin (511), et où une extrémité libre (514) dudit deuxième piston de vérin (512) est reliée, via une deuxième biellette (515), audit galet (30) de sorte à faire pivoter ledit galet (30) par rapport audit tube de transfert (4) autour dudit axe (Az) de rotation et modifier l'angle (α) dudit premier plan (P1) par rapport audit plan perpendiculaire (PP).

7. Système (1) selon la revendication 6, **caractérisé en ce que** ledit galet (30) comporte une face latérale (33) s'étendant globalement parallèlement audit premier plan (P1) et **en ce que** lesdits premiers moyens (3) de réglage comportent une platine (6) présentant une forme sensiblement correspondante à la forme de ladite face latérale (33), ladite platine (6) étant montée de manière coaxiale audit galet (30),
où ladite platine est montée fixe en rotation selon l'axe longitudinal (A₁) et par rapport audit galet (30),
et où ladite platine (6) comporte un logement (60) configuré pour recevoir une extrémité de la dite deuxième biellette (515) opposée audit deuxième piston de vérin (512).

8. Système (1) selon l'une quelconque des revendications 1 à 7, **caractérisé en ce qu'**il comporte en outre des deuxièmes moyens (7) de réglage de l'angle de pas desdites pales (20), lesdits deuxièmes moyens (7) de réglage étant configurés pour déplacer ledit galet (30) en translation le long dudit axe longitudinal (A₁) de sorte à modifier uniformément et simultanément l'angle de pas de toutes les pales (20) de ladite hélice (2).

9. Système selon la revendication 8, **caractérisé en ce qu'**il comporte un carter (70) et **en ce que** lesdits deuxièmes moyens (7) de réglage comportent un troisième vérin (71) comportant :
- une troisième chambre de vérin (711) s'étendant coaxialement audit axe longitudinal (A₁) et délimitée par des parois (713) dudit carter (70), et
- un troisième piston de vérin (712) formé par une portion dudit tube de transfert (4), ledit troisième piston de vérin (712) étant reçu dans ladite troisième chambre de vérin (711) et étant monté mobile en translation le long de l'axe longitudinal (A₁) dans ladite troisième chambre de vérin (711), où ledit galet (30) est destiné à être déplacé le long de l'axe longitudinal (A₁) lors du déplacement dudit troisième piston de vérin (712).

10. Aéronef (9) comportant au moins un système (1) de propulsion selon l'une quelconque des revendications 1 à 9.

## Patentansprüche

1. Antriebssystem (1) für ein Luftfahrzeug, das eine Längsachse (A₁) umfasst und:
- einen Propeller (2), der um die Längsachse (A₁) drehbeweglich gelagert ist, wobei der Propeller (2) eine Mehrzahl von Blättern (20) umfasst, die jeweils eine Blattachse (Ax) aufweisen, die sich im Wesentlichen senkrecht zu der Längsachse (A₁) erstreckt, wobei die Blätter (20) in Bezug auf die Längsachse (A₁) winklig verteilt sind; und
- erste Verstellmittel (3) zum Verstellen des Anstellwinkels der Blätter (20), wobei die ersten Verstellmittel (3) dazu ausgebildet ist, den Anstellwinkel jedes Blatts (20) in Abhängigkeit von der Winkelposition jedes Blatts (20) um die Längsachse (A₁) zu ändern,
**dadurch gekennzeichnet, dass** die ersten Verstellmittel (3) eine im Wesentlichen rohrförmige Rolle (30) umfassen, die sich im Wesentlichen koaxial zu der Längsachse (A₁) erstreckt, wobei die Rolle (30) auf einer Außenfläche (31) eine Aufnahme (32a, 32b) umfasst, die dazu ausgebildet ist, Füße (201) der Blätter (20) aufzunehmen, wobei sich die Aufnahme (32a, 32b) entlang einer ersten Ebene (P1) erstreckt, deren Winkel (α) ungleich null in Bezug auf eine zu einer Referenzebene (P0), in der die Längsachse (A₁) enthalten ist, senkrechten Ebene (PP) zwischen -15° und +15° beträgt.

2. System (1) nach Anspruch 1, **dadurch gekennzeichnet, dass** die Rolle (30) um die Längsachse (A₁) drehfest gelagert ist und dass die Aufnahme (32a) in Form einer Nut vorliegt, die sich im Wesentlichen in der ersten Ebene (P1) erstreckt,
wobei die Füße (201) der Blätter (20) in der Nut so aufgenommen sind, dass die Blätter (20) um die Rolle (30) und um die Längsachse (A₁) schwenken,
und wobei der Winkel (α) der ersten Ebene (P1) in Bezug auf die senkrechte Ebene (PP) fix ist, ungleich null ist und zwischen -15° und +15° beträgt.

3. System (1) nach Anspruch 1, **dadurch gekennzeichnet, dass** die Rolle (30) um die Längsachse (A₁) drehfest gelagert ist und dass die Aufnahme (32a) in Form einer Nut vorliegt, die sich im Wesentlichen in der ersten Ebene (P1) erstreckt,
wobei die Füße (201) der Blätter (20) in der Nut so aufgenommen sind, dass die Blätter (20) um die Rolle (30) und um die Längsachse (A₁) schwenken,
und wobei die ersten Verstellmittel (3) dazu ausgebildet sind, den Winkel (α) der ersten Ebene (P1) in Bezug auf die senkrechte Ebene (PP) zwischen -15° und +15° zu ändern.

4. System (1) nach Anspruch 3, **dadurch gekennzeichnet, dass** die ersten Verstellmittel (3) ein Übertragungsrohr (4) umfassen, das sich im Wesentlichen koaxial zu der Längsachse (A₁) erstreckt, wobei die Rolle (30) auf dem Übertragungsrohr (4) um eine Rotationsachse (Az), die senkrecht zu der Längsachse (A₁) verläuft, drehbeweglich gelagert ist,
wobei das Übertragungsrohr (4) einen ersten Zylinder (41) umfasst, der eine erste Zylinderkammer (411) umfasst, die durch Wände (413) des Übertragungsrohrs (4) begrenzt wird, und einen ersten Zylinderkolben (412), der in der ersten Zylinderkammer (411) aufgenommen ist und entlang der Längsachse (A₁) translatorisch beweglich in der ersten Zylinderkammer (411) gelagert ist, und wobei ein freies Ende (414) des ersten Zylinderkolbens (412) über eine erste Stange (415) mit der Rolle (30) verbunden ist, so dass die Rolle (30) in Bezug auf das Übertragungsrohr (4) um die Rotationsachse (Az) geschwenkt wird und der Winkel (α) der ersten Ebene (P1) in Bezug auf die senkrechte Ebene (PP) geändert wird.

5. System (1) nach Anspruch 1, **dadurch gekennzeichnet, dass** die Rolle (30) um die Längsachse (A₁) drehbeweglich gelagert ist und dass die Aufnahme (32b) in Form einer Mehrzahl von einzelnen Aufnahmen vorliegt, die sich im Wesentlichen in der ersten Ebene (P1) erstrecken,
wobei ein Fuß (201) jedes Blatts (20) in einer der Aufnahmen (32b) aufgenommen ist, so dass die Blätter (20) mit der Rolle (30) um die Längsachse (A₁) schwenken, und wobei die ersten Verstellmittel (3) dazu ausgebildet sind, den Winkel (α) der ersten Ebene (P1) in Bezug auf die senkrechte Ebene (PP) zwischen -15° und +15° zu ändern.

6. System (1) nach Anspruch 5, **dadurch gekennzeichnet, dass** die ersten Verstellmittel (3) ein um die Längsachse (A₁) drehbeweglich gelagertes Übertragungsrohr (4) umfassen, wobei die Rolle (30) um die Längsachse (A₁) drehbeweglich und auf dem Übertragungsrohr (4) um eine Rotationsachse (Az), die senkrecht zu der Längsachse (A₁) verläuft, drehbeweglich gelagert ist,
wobei die ersten Verstellmittel (3) ferner ein Hilfsübertragungsrohr (5) umfassen, das in Bezug auf die Längsachse (A₁) drehfest gelagert ist und sich koaxial zu dem Übertragungsrohr (4) erstreckt, wobei das Übertragungsrohr (4) um die Längsachse (A₁) innerhalb des Hilfsübertragungsrohrs (5) drehbeweglich gelagert ist, und wobei das Hilfsübertragungsrohr (5) einen zweiten Zylinder (51) umfasst, der eine zweite Zylinderkammer (511) umfasst, die durch Wände (513) des Hilfsübertragungsrohrs (5) begrenzt wird, und einen zweiten Zylinderkolben (512), der in der zweiten Zylinderkammer (511) aufgenommen ist und in der zweiten Zylinderkammer (511) translatorisch beweglich gelagert ist, und wobei ein freies Ende (514) des zweiten Zylinderkolbens (512) über eine zweite Stange (515) mit der Rolle (30) verbunden ist, so dass die Rolle (30) in Bezug auf das Übertragungsrohr (4) um die Rotationsachse (Az) geschwenkt wird und der Winkel (α) der ersten Ebene (P1) in Bezug auf die senkrechte Ebene (PP) geändert wird.

7. System (1) nach Anspruch 6, **dadurch gekennzeichnet, dass** die Rolle (30) eine Seitenfläche (33) umfasst, die sich im Wesentlichen parallel zu der ersten Ebene (P1) erstreckt, und dass die ersten Verstellmittel (3) eine Platte (6) umfassen, die eine Form aufweist, die in etwa der Form der Seitenfläche (33) entspricht, wobei die Platte (6) koaxial zu der Rolle (30) gelagert ist, wobei die Platte entlang der Längsachse (A₁) und in Bezug auf die Rolle (30) drehfest gelagert ist,
und wobei die Platte (6) eine Aufnahme (60) umfasst, die dazu ausgebildet ist, ein Ende der zweiten Stange (515), das zu dem zweiten Zylinderkolben (512) entgegengesetzt ist, aufzunehmen.

8. System (1) nach einem der Ansprüche 1 bis 7, **dadurch gekennzeichnet, dass** es ferner zweite Verstellmittel (7) zum Verstellen des Anstellwinkels der Blätter (20) umfasst, wobei die zweiten Verstellmittel (7) dazu ausgebildet sind, die Rolle (30) translatorisch entlang der Längsachse (A₁) zu verlagern, so dass der Anstellwinkel aller Blätter (20) des Propellers (2) einheitlich und gleichzeitig geändert wird.

9. System nach Anspruch 8, **dadurch gekennzeichnet, dass** es ein Gehäuse (70) umfasst und dass die zweiten Verstellmittel (7) einen dritten Zylinder (71) umfassen, der umfasst:
- eine dritte Zylinderkammer (711), die sich koaxial zu der Längsachse (A₁) erstreckt und durch Wände (713) des Gehäuses (70) begrenzt wird, und
- einen dritten Zylinderkolben (712), der durch einen Abschnitt des Übertragungsrohrs (4) gebildet wird, wobei der dritte Zylinderkolben (712) in der dritten Zylinderkammer (711) aufgenommen ist und entlang der Längsachse (A₁) translatorisch beweglich in der dritten Zylinderkammer (711) gelagert ist, wobei die Rolle (30) dazu bestimmt ist, bei der Verlagerung des dritten Zylinderkolbens (712) entlang der Längsachse (A₁) verlagert zu werden.

10. Luftfahrzeug (9), das mindestens ein Antriebssystem (1) nach einem der Ansprüche 1 bis 9 umfasst.

## Claims

1. Propulsion system (1) for aircraft having a longitudinal axis (A₁) and including:
- a propeller (2) mounted so as to be mobile in rotation around said longitudinal axis (A₁), said propeller (2) including a plurality of blades (20) each having a blade axis (Ax) extending globally perpendicular to the longitudinal axis (A₁), said blades (20) being distributed angularly relative to said longitudinal axis (A₁); and
- first means (3) for adjustment of the pitch angle of said blades (20), said first adjustment means (3) being configured to modify the pitch angle of each blade (20) as a function of the angular position of each blade (20) around said longitudinal axis (A₁),
**characterized in that** said first adjustment means (3) include a globally tubular roller (30) extending globally coaxial with said longitudinal axis (A₁), said roller (30) including on an external surface (31) a housing (32a, 32b) configured to receive roots (201) of said blades (20), said housing (32a, 32b) extending in a first plane (P1) the non-zero angle (α) of which relative to a plane (PP) perpendicular to a reference plane (P0) containing said longitudinal axis (A₁) is between -15° and +15°.

2. System (1) according to Claim 1, **characterized in that** said roller (30) is mounted so as to be fixed in rotation around said longitudinal axis (A₁) and **in that** said housing (32a) takes the form of a groove extending globally in said first plane (P1),
wherein said roots (201) of said blades (20) are received in said groove so that said blades (20) pivot around said roller (30) and around said longitudinal axis (A₁),
and wherein the angle (α) of said first plane (P1) relative to said perpendicular plane (PP) is fixed, non-zero and between -15° and +15°.

3. System (1) according to Claim 1, **characterized in that** said roller (30) is mounted so as to be fixed in rotation around said longitudinal axis (A₁) and **in that** said housing (32a) takes the form of a groove extending globally in said first plane (P1),
wherein said roots (201) of said blades (20) are received in said groove so that said blades (20) pivot around said roller (30) and around said longitudinal axis (A₁),
and wherein said first adjustment means (3) are configured to modify the angle (α) of said first plane (P1) relative to said perpendicular plane (PP) between - 15° and +15°.

4. System (1) according to Claim 3, **characterized in that** said first adjustment means (3) include a transfer tube (4) extending globally coaxial with said longitudinal axis (A₁), wherein said roller (30) is mounted on and mobile in rotation on said transfer tube (4) around a rotation axis (Az) perpendicular to said longitudinal axis (A₁),
wherein said transfer tube (4) includes a first actuator (41) including a first actuator chamber (411) delimited by walls (413) of said transfer tube (4) and a first actuator piston (412) received in said first actuator chamber (411) and mounted so as to be mobile in translation along said longitudinal axis (A₁) in said first actuator chamber (411), and wherein a free end (414) of said first actuator piston (412) is connected by a first link (415) to said roller (30) so as to cause said roller (30) to pivot relative to said transfer tube (4) around said rotation axis (Az) and to modify the angle (α) of said first plane (P1) relative to said perpendicular plane (PP).

5. System (1) according to Claim 1, **characterized in that** said roller (30) is mounted so as to be mobile in rotation around said longitudinal axis (A₁) and **in that** said housing (32b) takes the form of a plurality of individual housings extending globally in said first plane (P1), wherein a root (201) of each blade (20) is received in one of said housings (32b) so that said blades (20) pivot with said roller (30) around said longitudinal axis (A₁), and wherein said first adjustment means (3) are configured to modify the angle (α) of said first plane (P1) relative to said perpendicular plane (PP) between - 15° and +15°.

6. System (1) according to Claim 5, **characterized in that** said first adjustment means (3) include a transfer tube (4) mounted so as to be mobile in rotation around said longitudinal axis (A₁), wherein said roller (30) is mounted so as to be mobile in rotation around said longitudinal axis (A₁) and mobile in rotation on said transfer tube (4) around a rotation axis (Az) perpendicular to said longitudinal axis (A₁),
wherein said first adjustment means (3) further include an auxiliary transfer tube (5) mounted so as to be fixed in rotation relative to said longitudinal axis (A₁) and extending coaxially with said transfer tube (4), wherein said transfer tube (4) is mounted so as to be mobile in rotation around said longitudinal axis (A₁) inside said auxiliary transfer tube (5),
and wherein said auxiliary transfer tube (5) includes a second actuator (51) including a second actuator chamber (511) delimited by walls (513) of said auxiliary transfer tube (5) and a second actuator piston (512) received in said second actuator chamber (511) and mounted so as to be mobile in translation in said second actuator chamber (511), and wherein a free end (514) of said second actuator piston (512) is connected by a second link (515) to said roller (30) so as to cause said roller (30) to pivot relative to said transfer tube (4) around said rotation axis (Az) and to modify the angle (α) of said first plane (P1) relative to said perpendicular plane (PP).

7. System (1) according to Claim 6, **characterized in that** said roller (30) has a lateral face (33) extending globally parallel to said first plane (P1) and **in that** said first adjustment means (3) include a plate (6) having a shape substantially corresponding to the shape of said lateral face (33), said plate (6) being mounted coaxially with said roller (30),
wherein said plate is mounted so as to be fixed in rotation about the longitudinal axis (A₁) and relative to said roller (30),
and wherein said plate (6) includes a housing (60) configured to receive an end of said second link (515) opposite said second actuator piston (512).

8. System (1) according to any one of Claims 1 to 7, **characterized in that** it further includes second means (7) for adjustment of the pitch angle of said blades (20), said second adjustment means (7) being configured to move said roller (30) in translation along said longitudinal axis (A₁) so as to modify the pitch angle of all the blades (20) of said propeller (2) uniformly and simultaneously.

9. System according to Claim 8, **characterized in that** it includes a casing (70) and **in that** said second adjustment means (7) include a third actuator (71) including:
- a third actuator chamber (711) extending coaxial with said longitudinal axis (A₁) and delimited by walls (713) of said casing (70), and
- a third actuator piston (712) formed by a portion of said transfer tube (4), said third actuator piston (712) being received in said third actuator chamber (711) and being mounted so as to be mobile in translation along the longitudinal axis (A₁) in said third actuator chamber (711), wherein said roller (30) is designed to be moved along the longitudinal axis (A₁) during the movement of said third actuator piston (712).

10. Aircraft (9) including at least one propulsion system (1) according to any one of Claims 1 to 9.
